# EUROPEAN PATENT APPLICATION

(11) **EP 1 496 596 A1**
(43) Date of publication of application: **12.01.2005**
(21) Application number: 02710379.5
(22) Date of filing: 30.01.2002
(51) Int. Cl.: H02K 3/34, H02K 1/18

(54) **STATOR OF ROTATING ELECTRIC MOTOR**

(71) Applicant: MITSUBISHI DENKI KABUSHIKI KAISHA, Tokyo 100-8310 (JP)
(72) Inventor: TAKAI, Keiji, c/o Mitsubishi Denki Kabushiki K., Tokyo 100-8310 (JP); HASHIGUCHI, Naoki, c/o Mitsubishi Denki K. K., Tokyo 100-8310 (JP)
(74) Representative: HOFFMANN EITLE
(86) International application number: PCT/JP2002/000680
(87) International publication number: WO 2003/065544

(57) **Abstract**

In a stator of a conventional electric motor known heretofore, thickness of the upper and lower end portions of paired insulative frame members on which a coil is wound must be greater than that required indispensably for ensuring insulation. Consequently, length L2 of a stator core can not be assured adequately relative to an overall height H of the stator, giving rise to a problem that output torque is low.

In a stator 1 of an electric motor according to the present invention, corner portions of a pole tooth portion 3 is provided with offset portions 3a so that both end portions of the pole tooth portion have a narrow width in the direction thicknesswise thereof, while paired insulative frame members 5 are provided with first groove portions 5b for accommodating ridge portions 3b, respectively, of the pole tooth portion 3 and second groove portions 5c for accommodating shoulder portions 3c, respectively, of the pole tooth portion 3. Thus, ridge portions 3b of the pole tooth portion 3 can extend up to positions close to both ends, respectively, of the paired insulative frame members 5 in the direction thicknesswise.

As a result, the length L1 of the stator core 4 in the direction thicknesswise thereof can be made sufficiently great relative to the overall height H of the stator 1 for ensuring high output torque with adequate thickness of the insulative frame members 5 required for the insulation.

## Description

### TECHNICAL FIELD

The present invention relates to a stator of an electric motor having coils wound around individual magnetic pole tooth portions of a stator core with insulative frame members being interposed between the coils and the pole tooth portions, respectively.

### BACKGROUND TECHNIQUES

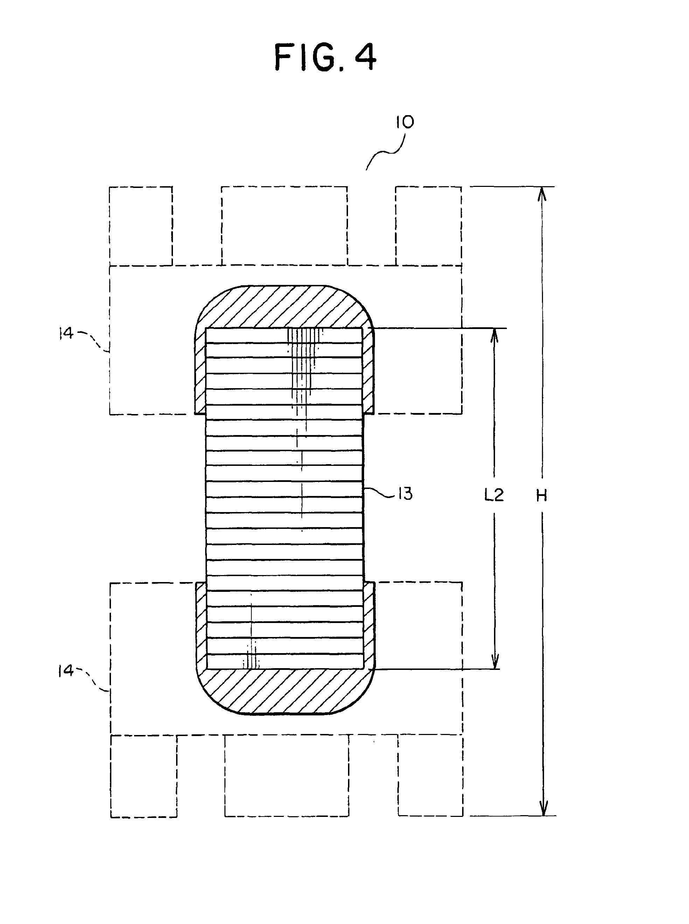

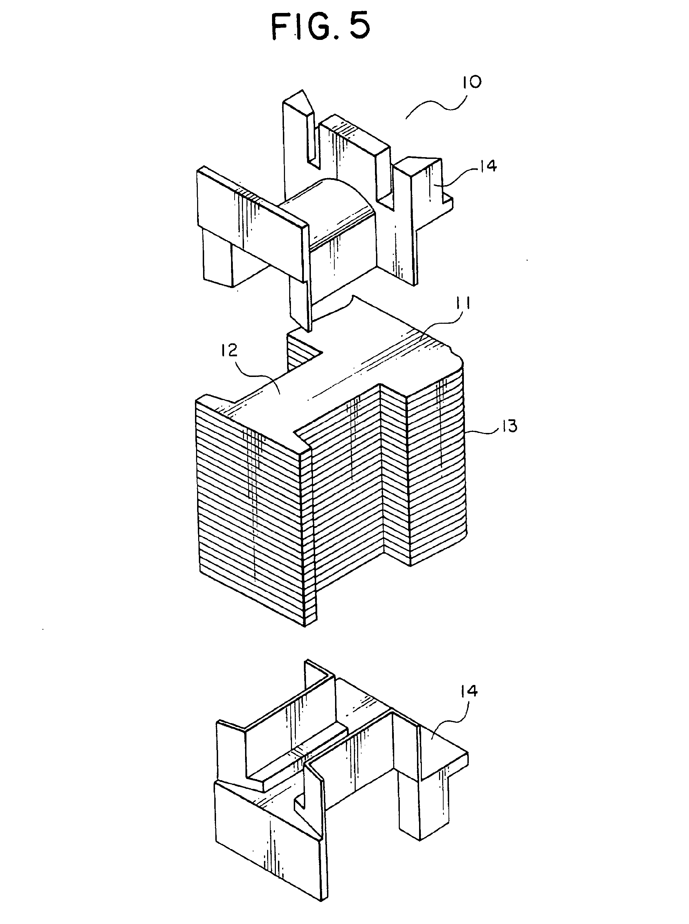

A structure of a stator 10 of a conventional electric motor known heretofore is shown in Figs. 4 and 5. Figure 4 is a vertical sectional view showing a stator 10 of the conventional electric motor. Further, Fig. 5 is an exploded perspective view showing the stator 10 of the conventional electric motor. As can be seen in these figures, the stator 10 of the conventional electric motor includes a stator core member 13 having a substantially rectangular yoke portion 11 of a predetermined thickness and a magnetic pole tooth portion 12 of a uniform width which projects from the yoke portion 11, and a pair of insulative frame members 14 which are snugly fit onto the pole tooth portion 12 of the stator core 13 so as to cover or enclose the pole tooth portion 12. A coated wire such as an enameled wire (not shown) is wound on and around the outer peripheral surfaces of the paired insulative frame members 14 in a coil-like form.

In general, if the coated wire is bent steeply, fracture and deterioration will occur in the coating. Accordingly, the coated wire has to be wound with a predetermined gentle curvature. By way of example, in the case of an enameled wire of 1.9 mm in diameter, it must be wound with the radius of curvature on the order of 30 mm.

For the reason mentioned above, each of the corners of the upper and lower end portions of the paired insulative frame members 14 must be so formed as to present a gently curved or rounded surface. Besides, the upper and lower end portions of the paired insulative frame members 14 have to be formed in a thickness which is greater than the thickness required essentially from the standpoint of insulation. As a result of this, it is impossible to realize an adequate length L2 of the stator core 13 in the direction thicknesswise thereof relative to the overall height H of the stator 10, giving rise to a problem that the available motor output torque is low.

A stator devised with a view to coping with the problem mentioned above is disclosed in Japanese Patent Application Laid-Open Publication No. 33397/2000. In this known stator, additional members are disposed on the upper and lower end portions, respectively, to thereby increase complementarily the length of the stator core in the direction thicknesswise thereof in an effort to make available a high output torque. However, with such stator structure, the members utterly differing from the stator core located intermediately must be mounted on the upper and lower end portions, respectively, of the stator core, which incur degradation in the productivity or manufacturing efficiency.

With the present invention, it is contemplated to solve the problem such as described above by providing a stator of the electric motor which can ensure a higher output torque with a same overall height as the conventional stator.

### DISCLOSURE OF THE INVENTION

The stator of the electric motor according to the present invention which includes yoke portions each having a predetermined thickness and magnetic pole tooth portions projecting from the yoke portions, respectively, pairs of insulative frame members each fit onto each of the magnetic pole tooth portions of the stator core so as to cover the magnetic pole tooth portion from both ends of the magnetic pole tooth portion in a direction thicknesswise thereof, and coils each wound around each pair of the insulative frame members, characterized in that each of the magnetic pole tooth portions is provided with offset portions so that both end portions of each of the magnetic pole tooth portions have a narrow width as viewed in the direction thicknesswise thereof, and that the pair of insulative frame members have first groove portions for accommodating therein ridge portions, respectively, of the magnetic pole tooth portion and second groove portions for accommodating therein at least partially shoulder portions, respectively, of the magnetic pole tooth portion.

In a stator implementation, the stator core features that it is constituted by a plurality of core sheets stacked in the direction thicknesswise of the stator core.

### BRIEF DESCRIPTION OF THE DRAWINGS

Figure 1 is a vertical sectional view showing a stator of an electric motor according to the present invention.
Figure 2 is an exploded perspective view showing a stator of the electric motor according to the present invention.

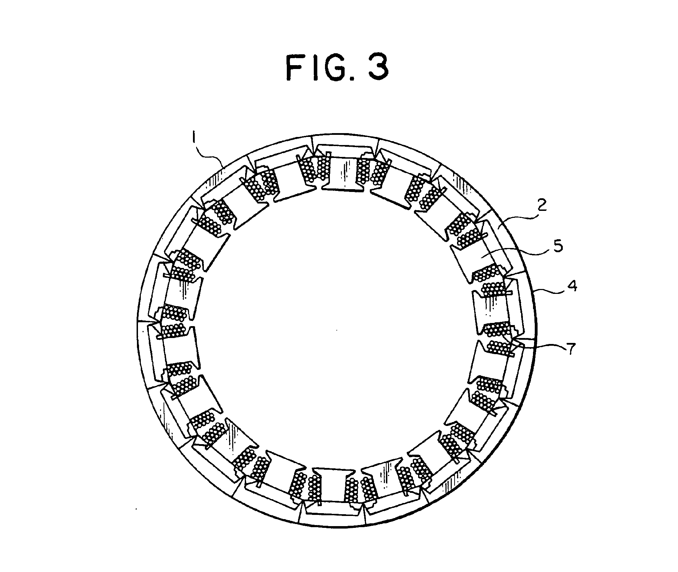

Figure 3 is a front view showing partially in section a stator of an electric motor implemented in an annular structure according to the present invention.
Figure 4 is a vertical sectional view showing a stator of a conventional electric motor.
Figure 5 is an exploded perspective view showing the stator of the conventional electric motor.

### BEST MODES FOR CARRYING OUT THE INVENTION

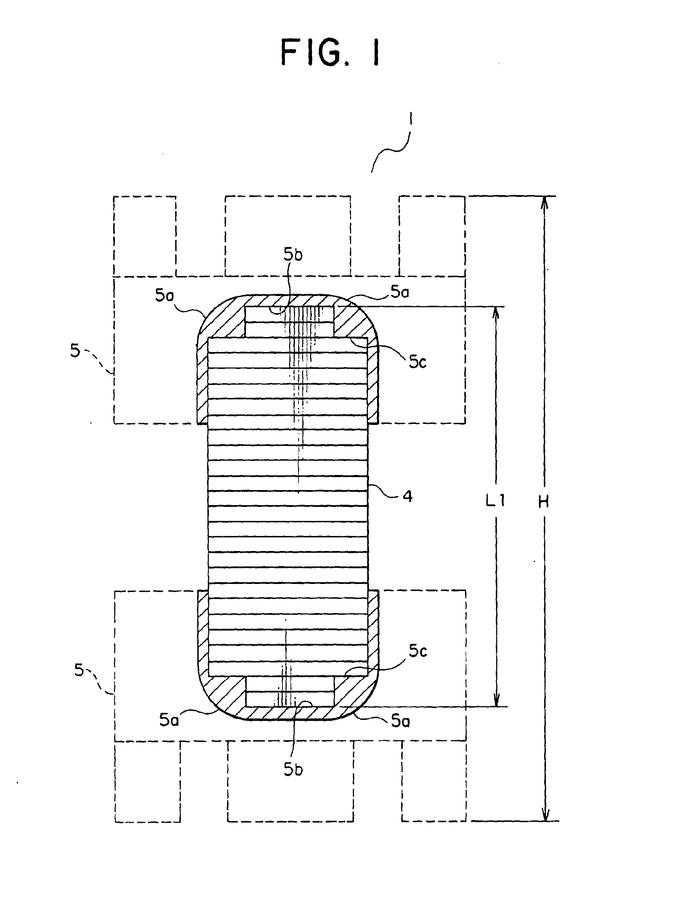

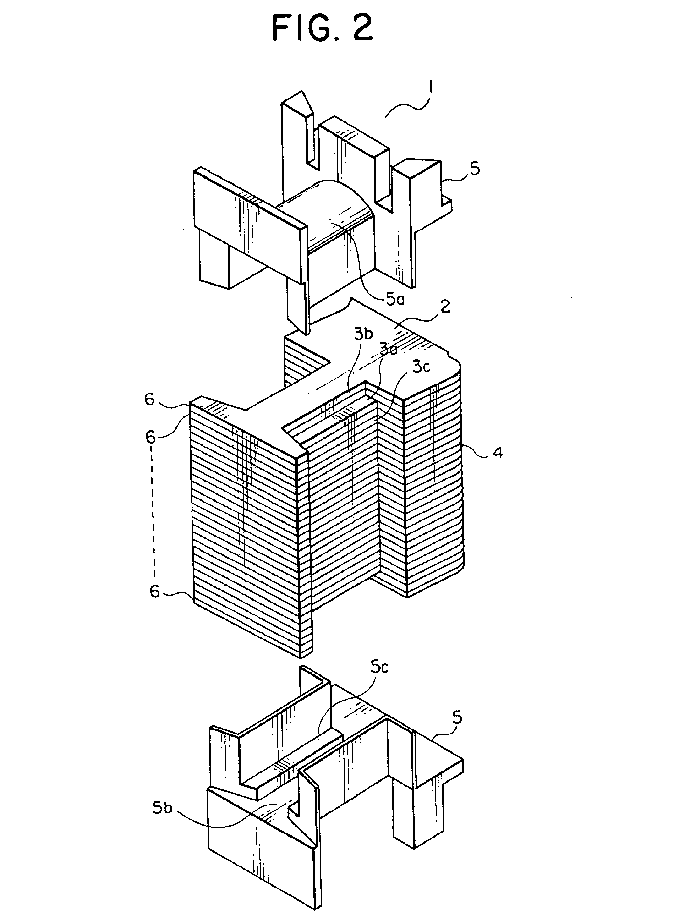

In the following, an exemplary embodiment of the present invention will be described. Figure 1 is a vertical sectional view showing a stator 1 of an electric motor according to the instant embodiment of the invention now under consideration. Further, Fig. 2 is an exploded perspective view showing the stator 1 of the electric motor according to the instant embodiment of the invention. As can be seen in these figures, the stator 1 of the electric motor according to the instant embodiment of the invention includes a stator core 4 having a substantially rectangular yoke portion 2 of a predetermined thickness and a magnetic pole tooth portion 3 projecting from the yoke portion 2, and a pair of insulative frame members 5 which are snugly fit onto the pole tooth portion 3 of the stator core 4 so as to cover and enclose the pole tooth portion. The stator core 4 is constituted by a plurality of core sheets 6 laminated or stacked in the direction thicknesswise of the stator core. Further, the stator 1 of the electric motor is implemented in an annular form by connecting the individual yoke portions 2 to one another, wherein a coated wire 7 such as an enameled wire is wound on and around the outer peripheral surfaces of the paired insulative frame members 5 in a coil-like form.

If the coated wire 7 is bent steeply, fracture and deterioration will occur in the coating. Accordingly, the coated wire has to be wound with a predetermined gentle curvature. By way of example, in the case of an enameled wire of 1.9 mm in diameter, it must be wound with a radius of curvature on the order of 30 mm. Under the circumstances, each of the corners 5a of both end portions of the paired insulative frame members 5 as viewed in the direction thicknesswise of the core is formed in a gently curved or rounded surface, while both end portions of the paired insulative frame members 5 in the direction thicknesswise of the core are formed in a thickness which is greater than that required indispensably from the standpoint of insulation.

Further, each of the corner portions of the pole tooth portion 3 of the stator core 4 is provided with offset portions 3a so that each of both end portions of the pole tooth portion has a narrower width as viewed in the direction thicknesswise of the core. Correspondingly, each of the insulative frame members 5 is provided with a first groove portion 5b for accommodating therein a ridge portion 3b of the pole tooth portion 3 on one hand and second groove portions 5c for accommodating, respectively, shoulder portions 3c of the pole tooth portion 3 on the other hand. By virtue of this structure, the ridge portion 3b of the pole tooth portion 3 can be snugly fit into the first groove portion 5b of each insulative frame member 5 while the shoulder portions 3c of the pole tooth portion 3 can be snugly fit into the second groove portions 5c, respectively, of the insulative frame member 5, whereby the ridge portion 3b of the pole tooth portion 3 can extend up to a position in the close vicinity of the end of the insulative frame member 5 as viewed in the direction thicknesswise of the core. Thus, the length L1 of the stator core 4 in the direction thicknesswise thereof relative to the overall height H of the stator 1 of the electric motor can be realized sufficiently great when compared with the length L2 of the stator core 13 of the conventional stator 10 shown in Figs. 4 and 5 while ensuring for the insulative frame members 5 the thickness which is demanded from the standpoints of insulation. Since the output torque of the motor is proportional to the length of the stator core 4 in the direction thicknesswise thereof, the stator 1 of the electric motor according to the instant embodiment of the invention can produce a higher output torque with the same overall height H as the conventional stator 10.

Additionally, the offset portions 4a of the stator core 4 can be implemented in a simple structure in which the width of the core sheets 6 disposed at the upper and lower end portions, respectively, of the pole tooth portion 3 as viewed in the direction thicknesswise thereof is made shorter or narrower than the width of the core sheets 6 disposed at an intermediate portion of the pole tooth portion. Thus, the stator can be manufactured extremely easily when compared with the conventional stator described in Japanese Patent Application Laid-Open Publication No. 33397/2000, whereby the manufacturing efficiency or productivity can significantly be enhanced.

### INDUSTRIAL APPLICABLITY

As is apparent from the foregoing, the stator of the electric motor according to the present invention is capable of generating higher output torque with a same overall height as the stator of the conventional motor and thus the electric motor according to the present invention is suited for the applications where high output torque is demanded notwithstanding of limitation imposed in respect to the space available for the installation of the motor.

## Claims

1. A stator of an electric motor comprising a stator core comprised of yoke portions each having a predetermined thickness and magnetic pole tooth portions projecting from said yoke portions, respectively, pairs of insulative frame members each fit onto each of the magnetic pole tooth portions of said stator core so as to cover said magnetic pole tooth portion from both ends of said magnetic pole tooth portion in a direction thicknesswise thereof, and coils each wound around each pair of said insulative frame members,
**characterized in that** each of said magnetic pole tooth portions is provided with offset portions so that both end portions of each of said magnetic pole tooth portions have a narrow width as viewed in the direction thicknesswise thereof, and
that said pair of insulative frame members have first groove portions for accommodating therein ridge portions, respectively, of said magnetic pole tooth portion and second groove portions for accommodating therein at least partially shoulder portions, respectively, of said magnetic pole tooth portion.

2. A stator of an electric motor as set forth in claim 1, **characterized in that** said stator core is constituted by a plurality of core sheets stacked in the direction thicknesswise of said the stator core.
